# EUROPÄISCHE PATENTSCHRIFT

(11) **EP 3 630 935 B1**
(45) Veröffentlichungstag und Bekanntmachung des Hinweises auf die Patenterteilung: **09.08.2023**
(21) Anmeldenummer: 18727750.4
(22) Anmeldetag: 22.05.2018
(51) Int. Cl.: C12H 1/07, B01D 61/14, B01D 61/16, B01D 61/18

(54) **VERFAHREN FÜR DEN CROSSFLOW BEI DER MEMBRANFILTRATION VON BIER**
METHOD FOR CROSSFLOW DURING MEMBRANE FILTRATION OF BEER
PROCÉDÉ D'ÉCOULEMENT TRANSVERSAL LORS DE LA FILTRATION DE BIÈRE SUR MEMBRANE

(30) Priorität: 23.05.2017 DE 102017208730
(43) Veröffentlichungstag der Anmeldung: 08.04.2020
(73) Patentinhaber: Krones AG, 93073 Neutraubling (DE)
(72) Erfinder: DR. ZACHARIAS, Joerg, 93073 Neutraubling (DE); FRAMMELSBERGER, Maximilian, 93073 Neutraubling (DE); HUMMEL, Stefan, 93073 Neutraubling (DE); STELLE, Knut, 93073 Neutraubling (DE); EBERL, Karlheinz, 93073 Neutraubling (DE); SCHEU, Dirk, 93073 Neutraubling (DE)
(74) Vertreter: Grünecker Patent- und Rechtsanwälte PartG mbB
(86) Internationale Anmeldenummer: PCT/EP2018/063344
(87) Internationale Veröffentlichungsnummer: WO 2018/215437

(56) Entgegenhaltungen:
- EP-A1- 1 721 656
- EP-A1- 1 743 689
- EP-A1- 1 757 356
- WO-A1-2004/007659
- DE-A1- 10 164 555
- FR-A1- 2 572 949

## Beschreibung

Die Erfindung betrifft eine Filtervorrichtung sowie ein Filtrationsverfahren mit mindestens einem Modulpaket gemäß dem Oberbegriff der Patentansprüche 1 und 10.

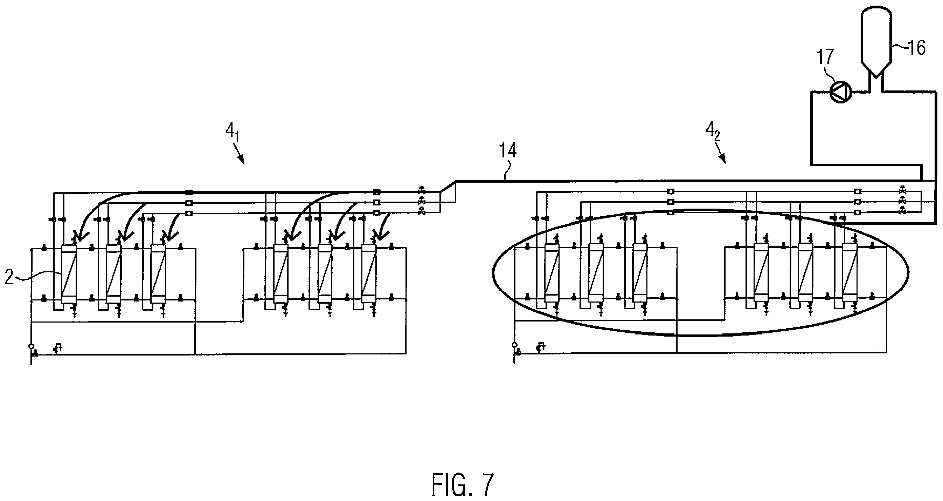

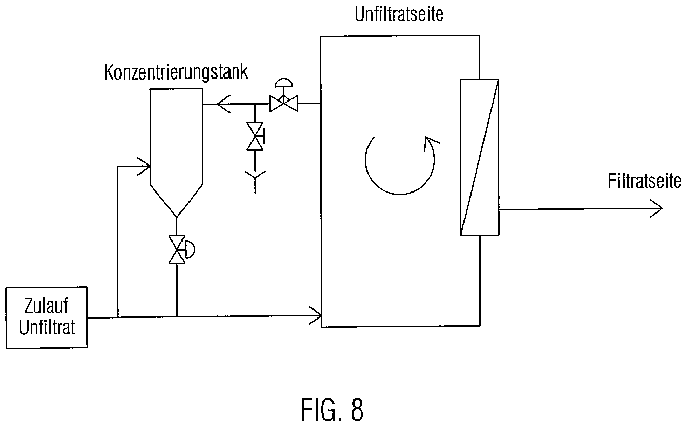

Die Membranfiltration (Mikrofiltration) von Bier zur Bierklärung ist seit einigen Jahren eine zunehmend akzeptierte Technologie. Dabei wird bevorzugt die Crossflow-Methode verwendet, bei der das Unfiltrat, hier das unfiltrierte Bier, entlang einer Membrane durch das Crossflow-Filtermodul 2 geführt wird, wie beispielsweise aus Fig. 7 hervorgeht. Bei der Filtration konzentrieren sich dabei zurückgehaltene Bestandteile (z. B. Hefe bzw. Mischung aus verschiedenen Proteinen und Polysacchariden etc.) auf der Unfiltratseite (Retentatseite) auf. Bei gleichbleibender Unfiltratkonzentration und gleichbleibender abgeführter Filtratmenge steigt die Konzentration in Abhängigkeit der Retentatumlaufzeit. Je nach Verfahren können die zurück gehaltenen hochkonzentrierten Bestandteile entweder völlig im Kreislauf bis zum Filtratende verbleiben oder sie werden teilweise in zusätzlich vorgesehene Aufkonzentriertanks abgezogen und gezielt später zu dosiert, wie beispielsweise aus Fig. 8 hervorgeht. Bei dem Aufkonzentriertank kann es sich beispielsweise um den Unfiltratpuffertank handeln. So lehrt DE10164555 eine Crossflow- Mikrofiltrationsanlage mit mindestens zwei Crossflow-Filtermodulen, die an einen Unfiltrat-/Retentratkreislauf mit Unfiltratzuleitungen und Retentatableitungen, an einen Filtrationsstrang mit Filtratableitungen und ersten Filtratabsperrventilen und an einen Filtratrücklaufstrang mit Filtratzulaufleitungen und zweiten Filtratabsperrventilen angeschlossen ist.

All diese Methoden haben gemeinsam, dass sie über den Verlauf der Filtration das Unfiltrat/Retentat aufkonzentrieren, sodass die Membrane der Module mit einer Deckschicht belegt werden. Einige Bestandteile werden zudem in den Poren der Membran adsorbiert, was dazu führt, dass die Membrane an der Oberfläche und bis ins Innere hinein verschmutzen. Durch die Verschmutzung der Membrane steigt der Transmembrandruck, wobei es eine Grenze gibt, bei der die Filtration beendet und das Konzentrat entsorgt (beispielhaft in einen Althefetank) werden muss. Im Anschluss gibt es dann beispielsweise die Möglichkeit, die Filtration erneut zu starten, rückzuspülen und dann weiter zu filtrieren oder eine Komplettreinigung/CIP-Reinigung (Cleaning in Place) durchzuführen.

Abhängig ist dies vom Verschmutzungszustand der Membran sowie der grundsätzlichen Reinigungsstrategie. Daher wird in der Regel bei Erreichen/Überschreiten eines vorab festgelegten mittleren Transmembrandruck (TMD) ein Zwischenreinigungsschritt durchgeführt oder eine Komplettreinigung/CIP-Reinigung. Die Reinigung wird dann in der Regel mit diversen Reinigungsmedien wie Wasser, Laugen, Säuren und Additiven durchgeführt. Es ist wünschenswert, die Standzeit der Module zu verlängern, d. h. die Reinigungsintervalle zu vergrößern und die Filtration möglichst effizient durchzuführen, da Produktionsausfälle in Folge einer Reinigung mit erheblichen Kosten verbunden sind.

Hiervon ausgehend liegt der vorliegenden Erfindung die Aufgabe zugrunde, eine Filtervorrichtung und ein Filtrationsverfahren bereitzustellen, welche auf einfache Art und Weise die Standzeit der Module verlängern und gleichzeitig eine effiziente Reinigung ermöglichen.

Erfindungsgemäß wird diese Aufgabe durch die Merkmale der Ansprüche 1 und 10 gelöst.

Gemäß der vorliegenden Erfindung weist die Filtervorrichtung mindestens ein Modulpaket auf, das mehrere, insbesondere mindestens drei Crossflow-Module umfasst, die jeweils einen ersten Unfiltratanschluss an einem ersten Ende aufweisen und einen zweiten Unfiltratanschluss an der gegenüberliegenden Seite des Moduls sowie mindestens einen Filtratablauf. Es ist vorteilhaft, wenn das Modul jeweils zwei (im Sinne von mindestens zwei) voneinander beabstandete Filtratabläufe aufweist, die insbesondere an gegenüberliegenden Enden bzw. Endbereichen des Moduls angeordnet sind. Gemäß der vorliegenden Erfindung ist eine Ventilanordnung vorgesehen, die derart ausgebildet ist, dass die einzelnen Module jeweils wahlweise von dem ersten oder dem zweiten Unfiltratanschluss mit Unfiltrat durchströmbar sind.

Die erfindungsgemäße Verschaltung bringt wesentliche Vorteile mit sich. Es hat sich nämlich gezeigt, dass die Filtration und somit auch die Verschmutzung ungleichmäßig über die Lauflänge der Membran ist. Entsprechendes ist ungünstig für die Filtratqualität und besonders ungünstig für die Standzeit der Membran. Durch das gezielte Schalten der Ventilanordnung kann somit mit einer Filtervorrichtung gemäß der vorliegenden Erfindung die Richtung des Unfiltratstroms eingestellt bzw. geändert werden, derart, dass eine gleichmäßige Verschmutzung in Flussrichtung über die Membran erfolgt, bzw. durch gezieltes Schalten oder Takten von Modulen ein Reinigungseffekt stattfindet. Da durch die erfindungsgemäße Anordnung möglich ist, dass in allen Flussrichtungen in Reihenschaltung oder Parallelbetrieb gearbeitet werden kann, kann ein Verblocken der Membran in den jeweiligen Modulen wirksam verzögert und die Standzeit erhöht werden. Auch zu Reinigungszwecken ist der entsprechende Aufbau vorteilhaft, da jeweils einzelne Module durch entsprechende Ventile und Verrohrung geschaltet werden können und die einzelnen Module gezielt rückgespült und/oder gereinigt werden können. Auch ist es durch gezielte Verschaltung möglich, einzelne Module aus der Reihenschaltung abzukoppeln bzw. einen Bypass zu schalten.

Unter Rückspülen versteht man, dass ein Rückspülmedium gegen Filtrationsrichtung, d.h. von der Filtratseite durch die Membran zur Unfiltratseite geführt wird. Als Rückspülmedium kann beispielsweise Bier, Wasser, oder Bier und Wasser verwendet werden. Das Rückspülen kann während des eigentlichen Filtrationsprozesses stattfinden.

Unter Reinigen versteht man ein Reinigen mit Reinigungsmedium wobei das Reinigungsmedium in Filtrationsrichtung, d.h. von der Unfiltratseite zur Filtratseite hin geführt werden kann oder aber entgegen Filtrationsrichtung, d.h. von der Filtratseite zur Unfiltratseite. Das Reinigen findet nach dem eigentlichen Filtrationsprozess statt. Als Reinigungsmedium kann beispielsweise Säure (eventuell mit Additiven), Lauge (eventuell mit Additiven), sonstige chemische Reinigungsmittel (die zum Beispiel Enzyme aufweisen), oder auch Wasser verwendet werden.

Da es möglich ist, die Module einzeln zu reinigen oder rückzuspülen kann jedes Modul nach seinem individuellen Bedarf gereinigt werden, das heißt in Abhängigkeit der Länge, Intensität und des Verschmutzungsgrades. Insbesondere kann auch tatsächlich das Modul gereinigt oder rückgespült werden, das gereinigt oder rückgespült werden soll, und zwar individuell mit der notwendigen Intensität. Bei parallel oder in Reihe geschalteten und gleichzeitig gereinigten Modulen ist das nicht eindeutig gewährleistet, da weniger verschmutzte Membranen immer einen höheren Filtratfluss während der Filtration und somit auch einen höheren Fluss von Reinigungsmedium aufweisen als es bei verschmutzten Modulen der Fall ist. Das kann zur Konsequenz haben, dass nach der Reinigung die stark verschmutzten Membranen nicht sauber sind, sprich nicht genügend gereinigt wurden, was die erneute gleichmäßige Beladung der Membran mit Partikeln (Schmutzfracht) bei der bzw. den nächsten Filtrationen erschwert oder sogar verhindert.

Gemäß einer bevorzugten Ausführungsform sind die Module parallel zueinander angeordnet wobei ihr jeweils erster Unfiltratanschluss mit einem ersten gemeinsamen Leitungsabschnitt einer Unfiltratleitung in Verbindung steht und ihr jeweils Zweiter Unfiltratanschluss mit einem zweiten gemeinsamen Leitungsabschnitt der Unfiltratleitung in Verbindung steht, wobei jeweils vor und nach den jeweiligen ersten und zweiten Unfiltratanschlüssen Ventileinrichtungen angeordnet sind, die derart schaltbar sind, dass das jeweilige Modul vom ersten oder zweiten Unfiltratanschluss aus mit Unfiltrat durchströmbar ist. Dabei stehen der erste und zweite Leitungsabschnitt der Unfiltratleitung in Verbindung, um ein Zirkulieren des Unfiltrats der Module im Kreislauf zu ermöglichen.

Dies wird insbesondere dadurch möglich, dass ein Membranmodul über jeweils zwei Unfiltratzuläufe (einer oben und einer unten), zwei Unfiltratausläufe (einer oben und einer unten) und zwei Filtratausläufe (einer oben einer unten) verfügt. Im Betrieb (Filtration und/oder Reinigung) sind dabei vorzugsweise immer jeweils ein Unfiltratzulauf ein Unfiltratauslauf und ein Filtratauslauf geöffnet, die anderen sind geschlossen. Hinsichtlich Unfiltrat sind dabei z.B. ein Zulauf und ein Auslauf auf gegenüberliegenden Modulseiten geöffnet. Besonders vorteilhaft ist zudem wenn der Filtratablauf auf der dem Unfiltratzulauf gegenüberliegen Seite geöffnet ist und der Filtratablauf auf der Unfiltratzulaufsseite geschlossen bleibt, damit eine optimale, vollständige Durchströmung des Moduls und dessen Membrane erreicht wird. Gleichseitige Öffnung von Unfiltratzulauf und Filtratauslauf führt zu einer ungleichmäßigen nicht vollständigen Membran-/ Membranmoduldurchströmung und vermindert neben der dem Filtratfluss auch die Standzeit der Membran. Bei einer Richtungsumkehr werden die Stellungen der geöffneten und geschlossenen Ventile vertauscht. Dadurch wird eine konstruktiv besonders einfach realisierbare Flussumkehr erreicht. Diese Schaltung eignet sich sowohl für die Produktion mit Bier (= Filtration) als auch für die Reinigung.

Allgemein ermöglicht die Erfindung, dass die Ventileinrichtungen der Ventilanordnung derart schaltbar sind, dass die Module in Reihe betrieben werden können und insbesondere die Richtung, in der das Unfiltrat das jeweilige Modul durchströmen kann, für jedes Modul einstellbar ist. Auch eine Parallelschaltung ist möglich.

Wenn gemäß der Erfindung mehrerer Module vorgesehen sind, sind die Ventileinrichtungen derart schaltbar, dass, wenn ein Modul in einer ersten Richtung von Unfiltrat durchströmbar ist und ein nachfolgendes Modul in der zweiten Richtung, die der ersten Richtung entgegengesetzt ist, durchströmbar ist. Dies kann das unmittelbar folgende Modul sein oder ein weiter nachfolgendes. Es ist auch möglich, dass die Ventileinrichtungen derart geschaltet werden können, dass mindestens ein Modul überbrückt wird, was insbesondere beim Rückspülen vorteilhaft sein kann, da zur Austragung der Beläge abgespülte Rückstände nicht durch nachfolgende Membranen geleitet werden müssen.

Durch die Umkehr der Fließrichtung in beispielsweise einer einzelnen Hohlfaser wird der Gradient des Druckverlustes des Durchflusses durch die Hohlfaser (mehrere Hohlfasern bilden zusammen ein Modul) über die Länge umgekehrt. Dadurch kehrt sich auch der lokale Transmembrandruck über die Länge der Membran um. Das bewirkt, dass die Membran des Moduls lokal unterschiedlich stark mit Schmutzfracht belastet wird. Eine große transmembrane Druckdifferenz am Einlauf eines Moduls bewirkt nämlich, dass Schmutz stärker in die Poren der Membran gepresst wird, was die spätere Reinigung erschwert. Eine kleine transmembrane Druckdifferenz am Auslauf der Membranhohlfaser wiederum bewirkt nur geringen Antransport von Schmutz zur Membran. Dies bedeutet auch einen geringeren lokalen Fluss durch die Membran des Moduls. Wird nun bei bestimmten Zeitpunkten, oder Mengen, oder Anstieg des Transmembrandruckes pro Menge, oder Anstieg des Transmembrandruckes pro Zeit der Fluss umgekehrt, kann die Beladung der Membran mit Schmutz gleichmäßig erfolgen. Außerdem können die Stellen der Membran, die noch sauber sind, vollständig zur positiven Filtration ausgenutzt werden.

Gemäß einer bevorzugten Ausführungsform umfasst die Filteranordnung mehrere Modulpakete, die eine Moduleinheit bilden.

Nun kann die Flussumkehr in einem Modulpaket zum einen derart erfolgen, dass die Unfiltratflussrichtung des Unfiltratvolumenstroms im gesamten umgekehrt wird, so dass dabei die Flussrichtung derart verändert wird, dass die Einzelmodule des Modulpaketes, die zuerst jeweils von links beginnend durchströmt werden, nach der Flussumkehr dann von rechts nach links durchströmt werden.

Zum anderen kann die Flussumkehr in den Einzelmodulen des Modulpaketes derart erreicht werden, dass die Unfiltratflussrichtung von beispielsweise links nach rechts beibehalten wird, die Ventilstellung des Modulpaketes aber derart geändert wird, dass für das Unfiltrat aus Zuläufen Ausläufe und aus Ausläufen Zuläufe werden und so ebenso über das gesamte Modulpaket in jedem einzelnen Modul eine Flussumkehr erreicht wird.

Durch die besonders konstruktiv bedingte Verbindung von Unfiltratzuläufen und Unfiltratausläufen wird diese Reihenschaltung erst möglich, die zudem im gesamten oder auch nur partiell eine Flussumkehr erfahren kann.

Für die Filtration von Bier oder Reinigung und Rückspülen der Membranmodule ist es zudem besonders vorteilhaft, wenn die Ventileinrichtung Regelventile bzw. Durchflussregler, insbesondere in der Filtratableitung aufweist, derart, dass der Durchfluss (Volumen pro Zeit) oder ein dazu proportionaler Wert durch ein Modul bzw. Moduleinheit (aus 1+n Modulen, die auf eine separate Filtratleitung zusammengefasst seien können) einstellbar ist, wobei insbesondere der Durchfluss aller Module in einem Modulpaket auf einen gleichen Wert eingestellt werden kann, was sowohl eine gleichmäßige Produktion von Bier als auch eine gleichmäßige Reinigung oder Rückspülung aller Module eines Modulpakets ermöglicht.

Es ist möglich, dass Filtrat aus dem mindestens einem Filtratablauf mindestens eines Moduls zum Rückspülen in den mindestens einen Filtratablauf mindestens eines anderen Moduls geleitet werden kann. Gemäß einem bevorzugten Ausführungsbeispiel mündet dabei der jeweilige mindestens eine Filtratablauf eines Moduls in eine jeweilige Filtratablaufleitung, wobei bei n Modulen in einem Modulpaket, insbesondere der n-te Filtratablauf eines n-ten Moduls eines ersten Modulpakets und der n-te Filtratablauf eines zweiten Modulpakets in eine gemeinsame n-te Filtratableitung münden. (wobei n eine ganze natürliche Zahl ist) Das bedeutet, dass zwei Module, eines aus einem ersten und eines aus einem zweiten Modulpaket über eine gemeinsame Filtratleitung gekoppelt sind. Dies ermöglicht beispielsweise ein Rückspülen von einzelnen Modulen eines zweiten Modulpakets durch Filtrat entsprechender Module des ersten Pakets. Eine solche Verschaltung bringt vergleichbare Druckverhältnisse, d. h. Transmembrandrücke mit sich, da der Unfiltratstrom von der gleichen Pumpe erzeugt wird.

Es gibt zwei weitere Möglichkeiten zum Rückspülen: Ein oder mehrere Module einer zweiten Moduleinheit werden mit einem oder mehreren Modulen einer ersten Moduleinheit rückgespült. Dazu wird die Pumpe der ersten Moduleinheit verwendet oder ein oder mehrere Module einer zweiten Moduleinheit werden mit Filtrat aus einem Filtratpuffertank und einer entsprechenden Pumpe zurückgespült.

Somit wird es möglich, dass die Fließgeschwindigkeit bzw. der Volumenstrom beim Rückspülvorgang (sowohl mit Bier als auch mit Reinigungsmedien) durch die Membran stark erhöht wird. Besonders vorteilhaft ist dabei eine Erhöhung des Volumenstroms um mindesten das 2 bis 10fache des Volumenstroms bei der Produktion. Das kann beispielsweise bei einer Produktion mit 50l/m²h eine Rückspülgeschwindigkeit von 300l/m²h sein. Es können mehrere Module gleichzeitig rückgespült werden. Dabei kann eine beliebige Anzahl an Modulen (1-n), die rückgespült werden sollen, ausgewählt werden. Auch die Rückspülrichtung durch das Modul kann gewechselt werden. Es kann also besonders auch während der Rückspülung Geschwindigkeit und Flussweg verändert werden. Die Rückspülgeschwindigkeit kann auch je nach Einzelmodul unterschiedlich gewählt werden.

Gemäß einem bevorzugten Ausführungsbeispiel sind die ersten und zweiten Leitungsabschnitte der Unfiltratleitung miteinander verbunden, wobei das Unfiltrat durch die Unfiltratleitung und die Module im Kreislauf führbar ist und/oder die Unfiltratleitung eines ersten Modulpakets mit einer Unfiltratleitung eines zweiten Modulpakets verbunden ist das heißt durch Schalten der entsprechenden Ventile verbindbar ist.

Gemäß einer bevorzugten Ausführungsform ist es möglich, dass die Filteranordnung für n Module mindestens n-1 Reinigung-Anschlüsse (z.B. CIP-Anschlüsse) insbesondere jeweils in dem ersten gemeinsamen Leitungsabschnitt und dem zweiten gemeinsamen Leitungsabschnitt aufweist. Dann kann ein entsprechender Anschluss jeweils zwischen den Modulen angeordnet sein. Es können auch n oder n+1 Anschlüsse vorgesehen sein.

Gemäß einer bevorzugten Ausführungsform weist jedes Modul zwei separate Reinigung-Anschlüsse (CIP-Anschlüsse) auf um ein Reinigungsmedium beispielsweise über den Kopfraum des Moduls in den ersten oder zweiten Unfiltratanschluss des Moduls zu leiten. Das heißt, dass entweder zwischen zwei Modulen in der Unfiltratleitung ein entsprechender Anschluss vorgesehen sein kann, den sich dann zwei benachbarte Module teilen können oder aber gesonderte Anschlüsse vorgesehen sind. Somit können die Module sowohl vom ersten als auch vom zweiten Anschluss in beliebiger Richtung gespült werden.

Die zuvor genannten Anschlüsse werden zwar insbesondere als Reinigungsanschluss/-anschlüsse und insbesondere zur CIP beschrieben selbstverständlich können sie jedoch auch zudem und/oder alternativ zur Entlüftung und/oder zum Ausschub zum Gully oder dergleichen Verwendung finden.

Das Filtrationsverfahren mit einer Filteranordnung nach mindestens einem der Ansprüche 1 bis 9 ist dadurch gekennzeichnet, dass die Ventilanordnungen derart geschaltet wird, dass die einzelnen Module jeweils wahlweise entweder von dem ersten oder zweiten Unfiltratanschluss mit Unfiltrat durchströmt werden und/oder vom Unfiltratstrom abgekoppelt werden, d.h. dass der Unfiltratstrom nicht durch die entsprechenden Module hindurch strömt. Es ist dabei gemäß einer bevorzugten Ausführungsform möglich, dass lediglich die Filtratabläufe der abgekoppelten Module geschlossen werden. Die Unfiltratzuläufe bleiben offen.

Es ist möglich, während der Filtration und/oder während der Reinigung der Module die Ventileinrichtungen so zu schalten, dass die Flussrichtung des Unfiltrats bzw. Reinigungsmediums durch ein Modul eines Modulpakets umgekehrt wird und/oder ein Modul getaktet betrieben wird, wobei getaktet hier bedeutet, dass das Modul in Intervallen betrieben wird, d. h. zum Beispiel zeitweise ein Bypass geschaltet wird.

Es ist auch möglich, dass die Ventilanordnung derart verschaltet wird, dass Filtrat eines ersten Moduls über die Filtratableitung dem Filtratablauf eines weiteren Moduls zum Rückspülen zugeleitet wird und insbesondere, wenn mehrere Modulpakete vorgesehen sind, das Unfiltrat des n-ten Moduls des ersten Pakets über die gemeinsame Filtratleitung dem Filtratablauf des n-ten Moduls des zweiten Modulpakets zum Rückspülen zugeführt wird.

Gemäß einem bevorzugten Ausführungsbeispiel wird das von den Modulen erzeugte Filtrat einem Filtratpuffertank zugeführt und zum Beispiel bei der Rückspülung jeweils mindestens eines der Module mit Filtrat aus dem Puffertank gespült, während andere Module Filtrat erzeugen, also im Filtrationsmodus sind. Das heißt, dass es beispielsweise möglich ist, dass Filtrat eines Modulpakets oder einer Moduleinheit, die mehrere Modulpakete umfasst, dem Filtratpuffertank zugeführt wird, und jeweils mindestens ein Modul eines anderen Modulpakets oder einer anderen Moduleinheit mit Filtrat aus dem Puffertank rückgespült wird.

Entsprechendes ermöglicht einen kontinuierlichen Betrieb.

Das Rückspülen kann jedoch auch so erfolgen, dass beispielsweise mehrere Moduleinheiten vorgesehen sind, die jeweils mehrere Modulpakete umfassen, wobei die erste Moduleinheit eine Sammelfiltratablaufleitung aufweist, über die das Filtrat von mehreren Modulen, insbesondere von allen Modulpaketen abläuft.

Das Filtrat dieser ersten Moduleinheit kann über die Sammelfiltratablaufleitung zum Rückspülen von mindestens einem Modul einer zweiten Moduleinheit verwendet werden. Vorzugsweise ist die Anzahl der rückgespülten Module der zweiten Moduleinheit kleiner als die Anzahl der Module, die das Filtrat produziert haben. Somit ist eine Rückspülung bei hohem Druck möglich. Es ist auch denkbar, dass ein Modul mit Filtrat, das gerade von anderen Modulen erzeugt wird, rückgespült wird und gleichzeitig noch Filtrat aus dem Filtratpuffertank zugeführt wird, um den Rückspüldruck zu erhöhen.

Es ist vorteilhaft, wenn einzelne Module eines Modulpakets einzeln rückgespült oder gereinigt werden, sodass ein möglichst hoher Rückspüldruck und/oder Reinigungsdruck erhalten werden kann. Da es möglich ist die Module einzelnen zu reinigen oder rückzuspülen kann jedes Modul nach seinem individuellen Bedarf gereinigt werden, das heißt zum Beispiel in Abhängigkeit der der Betriebsdauer und/oder des Verschmutzungsgrades.

Die Module eines Modulpakets können dann aber nacheinander rückgespült und/oder gereinigt werden, um sicherzustellen, dass alle Module eines Modulpakets in gereinigtem Zustand sind, bzw. in einem für die nächste Filtration geeigneten Zustand.

Zudem können die einzelnen Module wahlweise vom unteren und/oder vom oberen Filtratablauf zielgerichtet rückgespült werden. Das Modul kann einen oberen und einen unteren Filtrat ablauf aufweisen, die beide mit einem Filtratraum in Verbindung stehen.

Das zum Reinigen, insbesondere Rückspülen verwendete Filtrat ist, wie zuvor beschrieben, z.B. Produkt, insbesondere Bier. Es kann aber auch mit einem CIP-Medium rückgespült werden. Ein CIP-Medium kann auch nicht nur zum Rückspülen verwendet werden, sondern auch durch die Unfiltratleitungen die Module durchströmen, um die Module in dieser Richtung, in Filtrationsrichtung zu reinigen.

Wenn filtriertes Produkt, insbesondere Bier, als Medium zum Rückspülen eines Moduls verwendet wird, kann das Medium nach dem Rückspülen zum Beispiel wieder der Unfiltratleitung eines Modulpaketes und/oder zum Beispiel über diesen Weg weiter bis zu einem Puffertank für Unfiltrat oder Konzentrat rückgeführt werden oder wahlweise über einen Reinigungsanschluss verworfen werden D.h., dass man das Medium zum Rückspülen entweder verwerfen kann oder aber puffern und zu einem späteren Zeitpunkt wieder der Filtration zu führen kann.

Gemäß einem bevorzugten Ausführungsbeispiel der vorliegenden Erfindung wird das Modul aus einem Modulpaket individuell in Abhängigkeit eines Filterparameters durch Rückspülen gereinigt und/oder während des Betriebs die Durchflussrichtung des Unfiltrats gewechselt. Dabei kann z. B. der Transmembrandruck gemessen werden. Bei Erreichen eines ersten Grenzwerts kann beispielsweise die Flussrichtung durch das Modul geändert werden, während bei Erreichen eines zweiten Grenzwertes eine Rückspülung erfolgt. Vorteilhaft bei der Erfindung ist, dass auch einzelne Module in einem Modulpaket oder einer Moduleinheit während des Betriebs durch Richtungswechsel abgereinigt werden können oder aber auch einzeln rückgespült werden können, ohne dass die anderen Module zurückgespült werden. Unter abgereinigt versteht man das Abtragen der Deckschicht oder exakter formuliert eine gleichmäßigere Verteilung der Deckschicht, dadurch kann die Dauer der Filtration verlängert werden. Es ist auch möglich, dass bei Erreichen eines bestimmten Grenzwertes die Module durch Schalten der Ventileinrichtungen abgekoppelt werden oder getaktet betrieben werden. Die vorliegende Erfindung wird nachfolgend unter Bezugnahme der folgenden Figuren näher erläutert:
- Fig. 1a: zeigt grob schematisch ein Ausführungsbeispiel einer Filtervorrichtung gemäß der vorliegenden Erfindung mit zwei Modulpaketen.
- Fig. 1b: zeigt eine besondere Ausgestaltung des in Fig. 1a gezeigten Ausführungsbeispiels

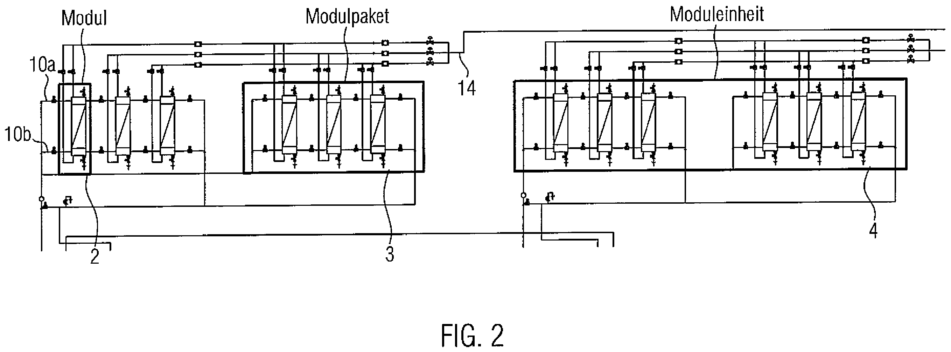

- Fig. 2: zeigt grob schematisch eine Filtervorrichtung gemäß der vorliegenden Erfindung mit zwei Moduleinheiten, die jeweils zwei Modulpakete mit mehreren Modulen aufweisen.
- Fig. 3a: zeigt grob schematisch unterschiedliche mögliche Durchströmungsrichtungen durch die Module eines Modulpakets durch Schalten der Ventileinrichtungen
- Fig. 3b: zeigt grob schematisch unterschiedliche Durchströmungsrichtungen durch Richtungsumkehr der Strömung durch das ganze Modulpaket
- Fig. 4: zeigt grob schematisch das Rückspülen eines zweiten Filterpakets mit Filtrat eines ersten Filterpakets.
- Fig. 5: zeigt grob schematisch das Rückspülen einer ersten Moduleinheit mit Filtrat von einer zweiten Moduleinheit.
- Fig. 6: zeigt grob schematisch das Rückspülen einzelner Module einer ersten Moduleinheit durch Filtrat einer zweiten Moduleinheit.
- Fig. 7: zeigt eine weitere Ausführungsform, bei der eine Moduleinheit mit Filtrat aus einem Puffertank rückgespült wird.
- Fig. 8: zeigt grob schematisch einen Crossflow-Filter gemäß dem Stand der Technik.
- Fig. 9: zeigt ein Modulpaket mit CIP Anschlüssen gemäß der Erfindung

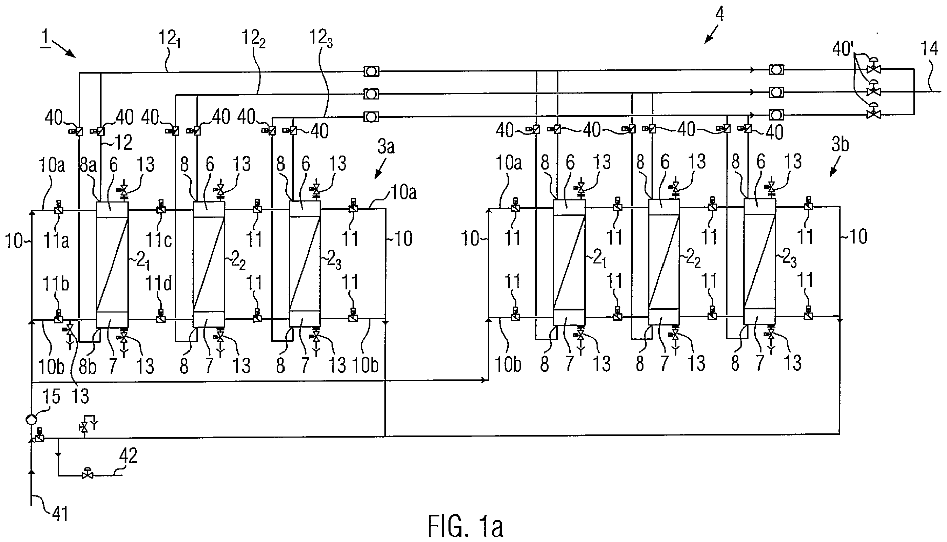

Fig. 1a zeigt grobschematisch eine Ausführungsform einer Filtervorrichtung 1 gemäß der vorliegenden Erfindung mit einer Moduleinheit 4, bestehend aus zwei Modulpaketen 3a, 3b, wobei jedes Modulpaket drei Crossflow-Module umfasst.

Unter dem Ausdruck "Modul" versteht man in dieser Anmeldung ein Crossflow-Modul, das beispielsweise Kunststoffhohlfasern umfasst (oder keramische Filterkerzen mit Mikrofiltrationsporen von z. B. 0,45 µm). Ein Modul umfasst zum Beispiel eine Membrankartusche mit einer Vielzahl von Hohlfasern (beispielsweise 2.000 bis 3.000), die in das Mantelrohr der Kartusche eingepottet sind. Das Potting kann auch direkt in das Druckrohr erfolgen. Das Modul kann beispielsweise 0,5 bis 1,5 m lang sein, insbesondere 0,7 bis 1 m. Grundsätzlich sind alle gängigen Crossflow-Filtermodule für die vorliegende Erfindung geeignet, die für die Filtration von Bier insbesondere eine Porenweite in einem Bereich von 0,2 µm bis 1,2 µm, insbesondere 0,3 µm bis 0,7 µm aufweisen. Ein Modul kann beispielsweise an gegenüberliegenden Enden zwei Kopfräume aufweisen, die mit Unfiltratnschlüssen des Moduls in Verbindung stehen. Durch den jeweiligen Kopfraum kann auch eine Filtratableitung nach außen durchgeführt sein. Die Filtratableitung kann aber auch seitlich von der Membrankartusche abzweigen. Insbesondere können auch zwei Filtratableitungen vorgesehen sein.

Ein Modulpaket 3 umfasst mindestens zwei insbesondere mindestens drei Module 2.

Eine Moduleinheit 4 umfasst mindestens zwei nebeneinander angeordnete Modulpakete 3. Die Modulpakete einer Moduleinheit weisen eine gemeinsame Pumpe 15 für das Unfiltrat auf. Eine jeweilige Moduleinheit 4 steht insbesondere auf einem eigenen Rahmen.

Wie aus Fig. 1a hervorgeht, sind hier 2 Modulpakete vorgesehen, Modulpaket 3a und Modulpaket 3b. Die Module 2 weisen jeweils einen ersten Unfiltratanschluss 6, hier an der Oberseite des jeweiligen Moduls und einen zweiten Unfiltratanschluss 7 an der gegenüberliegenden Seite zum Beispiel im jeweiligen Kopfraum des Moduls auf. Weiter weisen die Module zumindest einen Filtratablauf, hier zwei Filtratabläufe, 8 auf, die in jeweilige Filtratablaufleitungen 12₁, 12₂, 12₃ münden, wobei auch die Filtratabläufe 8 der Module 2 des zweiten Modulpakets 3b jeweils in die entsprechende Filtratleitung 12₁, 12₂, 12₃ münden, d. h., dass der jeweilige mindestens eine Filtratablauf der jeweiligen Module in eine jeweilige Filtratablaufleitung 12 mündet, wobei, wenn n Module in einem Modulpaket 3a, b vorgesehen sind, der n-te Filtratablauf eines n-ten Moduls des ersten Modulpakets 3a und der n-te Filtratablauf 8 eines zweiten Modulpakets 3b in eine gemeinsame n-te Filtratableitung 12ₙ münden. Eine solche Verschaltung bringt vergleichbare Druckverhältnisse, d. h. Transmembrandrücke mit sich, da der Unfiltratstrom von der gleichen Pumpe 15 erzeugt wird.

Die einzelnen Filtratablaufleitungen 12ₙ können in eine gemeinsame Leitung 14 münden, wie aus Fig. 1a hervorgeht. Gemäß der vorliegenden Erfindung weist die Filtervorrichtung 1 eine Ventilanordnung mit mehreren Ventileinrichtungen 11, d. h. Ventilen oder Klappen auf, wobei die Ventilanordnung derart ausgebildet ist, dass die einzelnen Module 2 jeweils wahlweise entweder von dem ersten oder dem zweiten Unfiltratanschluss 6, 7 mit Unfiltrat durchströmbar sind.

Es wäre auch möglich, für jedes Modul zwei entsprechende Dreiwegeventile einzusetzen, wobei ein entsprechendes Dreiwegeventil auf jeder Seite des Moduls mit einer Unfiltratleitung vor und hinter dem Modul sowie dem ersten oder zweiten Unfiltratanschluss verbunden ist.

Wie aus Fig. 1a hervorgeht, sind in diesem Ausführungsbeispiel die Modulepakete 3 parallel zueinander angeordnet und ihr jeweils erster Unfiltratanschluss 6 mit einem ersten gemeinsamen Leitungsabschnitt 10a der Unfiltratleitung 10 verbunden. Die jeweils zweite Unfiltratanschluss 7 ist mit einem zweiten gemeinsamen Leitungsabschnitt 10b der Unfiltratleitung 10 verbunden. Die erste und zweite Unfiltratleitung 10a, 10b sind miteinander derart verbunden, dass Unfiltrat durch die Module 2 im Kreislauf geführt werden kann. Jeweils vor und nach den jeweiligen ersten und zweiten Unfiltratanschlüssen dann die Ventile 11 angeordnet, die derart schaltbar sind, dass das jeweilige Modul entweder von dem ersten oder dem zweiten Unfiltratanschluss mit Unfiltrat durchströmbar ist. Die jeweiligen Module 2 weisen hier auch im jeweiligen oberen und unteren Kopfraum Reinigungsanschlüsse 13 auf, , über die zum Beispiel Reinigungsmittel anstatt des Unfiltrats über den Unfiltratanschluss 6 durch das Modul geleitet werden kann. Am unteren Ende ist ebenfalls ein Reinigungsanschluss 13 vorgesehen, über den z.B. über den zweiten Unfiltratanschluss 7 das CIP-Medium abgeleitet, beispielsweise in den Gully verworfen werden kann.

Die Reinigungsanschlüsse 13 können jedoch auch zu einem anderen Zweck vorgesehen sein. Der obere Anschluss 13 kann beispielsweise zur Entlüftung verwendet werden, und der untere Anschluss 13 kann beispielsweise für den Ausschub von Unfiltrat oder Reinigungsmedium in einen Gully oder Tank vorgesehen sein. Der bzw. die Anschlüsse 13 können bei jedem Modul 2 vorhanden sein oder auch pro Modulpaket 3 zusammengefasst werden.

Die Ventileinrichtungen 11 sind derart schaltbar, dass die Module 2₁, 2₂, 2₃ in Reihe betrieben werden können und insbesondere die Richtung, in der das Unfiltrat des jeweilige Modul durchströmen kann, für jedes Modul einzeln einstellbar ist.

Dabei zeichnet sich eine besondere Ausführungsform dadurch aus, dass ein jeweiliges Membranmodul wie das 2, (Fig. 1a) über jeweils zwei Unfiltratzuläufe (einer oben über Leitungsabschnitt 10a mit Ventil 11a und einer unten über Leitungsabschnitt 10b mit Ventil 11b), zwei Unfiltratausläufe (einer oben mit Ventil bei 11c und einer unten mit Ventil bei 11d) und zwei Filtratausläufe (einer oben bei 8a einer unten 8b) verfügt. Die Ausläufe 11c und 11d des Modules 2₁ (z.B. 2n-1 ) werden dann entsprechende Zuläufe für das nachfolgende Modul 2₂ (z.B. 2 n).

Im Betrieb (Filtration und/oder Reinigung) sind dabei immer jeweils ein Unfiltratzulauf (11a oder 11b), ein Unfiltratauslauf (11c oder 11d) und ein Filtratauslauf (8a oder 8b) geöffnet, entsprechend sind die jeweils anderen Ventile der Paare geschlossen. Unfiltratszulauf und Filtratablauf sind vorzugsweise auf der gegenüberliegenden Modulseiten geöffnet, also entweder 11a und 8b oder 11b und 8a. Besonders vorteilhaft ist zudem wenn der Filtratablauf auf der Unfiltratzulaufsseite geschlossen bleibt (also entsprechend 8a "zu" bei 11a/8b offener Durchströmung oder 8b "zu" bei 11b/8a offener Durchströmung), damit eine optimale, vollständige Durchströmung des Moduls und dessen Membrane erreicht wird. Gleichseitige Öffnung von Unfiltratzulauf und Filtratauslauf führt zu einer ungleichmäßigen nicht vollständigen Membran-/ Membranmoduldurchströmung und vermindert neben der dem Filtratfluss auch die Standzeit der Membran. Vorteilhafterweise liegen der Unfiltratzulauf und der Unfiltratablauf auf gegenüberliegenden Modulseiten. Bei einer Richtungsumkehr werden die Stellungen der geöffneten und geschlossenen Ventile vertauscht, z.B. 11a/11d/8b "offen" mit 11b/11c/8a "zu". Dadurch wird eine konstruktiv besonders einfach realisierbare Flussumkehr erreicht.

Bei einer kompletten Flussumkehr des gesamten Cossflowvolumenstroms können sich zudem die Zu- und Auslaufrichtungen vollständig ändern, so dass dann die Unfiltratzuläufe 11a und/oder 11b zu Unfiltratausläufen werden und im Gegenzug dazu die 11c und/oder 11d zu den Zuläufen.

Diese Schaltung eignet sich sowohl für die Produktion mit Bier als auch für die Reinigung. Entsprechendes gilt für die weiteren Membranmodule der Fig. 1a: 2₂, 2₃.

Die Figur 1a zeigt weiter hin eine Leitung 41, welche den Zulauf aus dem Puffertankunfiltrat darstellt und eine Leitung 42, die den Rücklauf von konzentriertem Unfiltrat aus dem Crossflowkreislauf zum Puffertankunfiltrat ermöglicht.

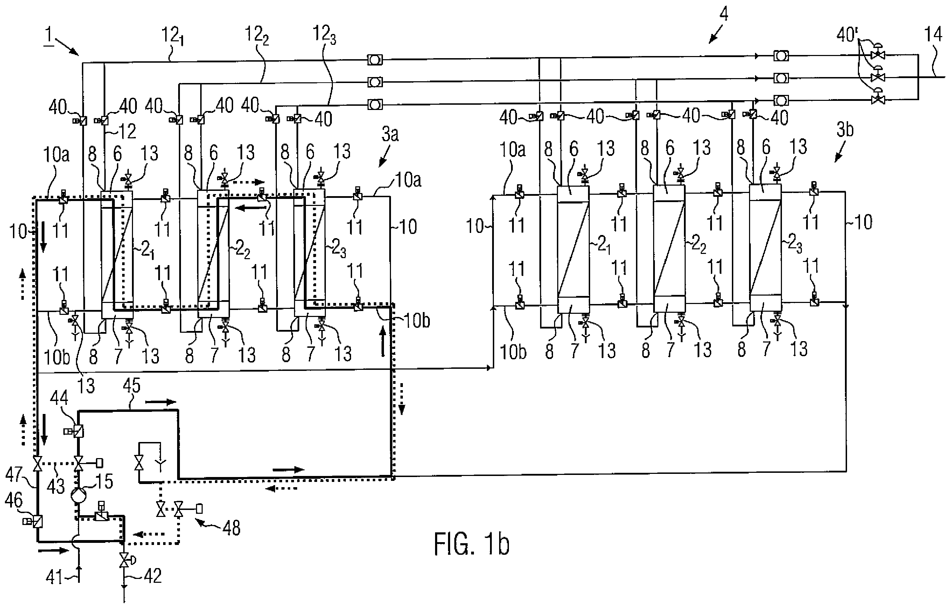

Figur 1b entspricht im Wesentlichen der Figur 1a, zeigt jedoch weiter eine Schaltung zum Bewerkstelligen einer Flussumkehr auf. In Figur 1b sind wie durch die Pfeile dargestellt ist unterschiedliche entgegengesetzte Flussrichtungen möglich.

Die Vorrichtung weist eine Umschalteinrichtung 43,44, 46, 48 auf, zur Umkehr der Flussrichtung durch die Module , wie in Fig. 1b durch die Richtungswege mit unterschiedlichem Strich dargestellt ist. Durch die Bypassleitung 45 mit den Ventilen 43 ( z.B. Doppelsitzventil) und 44 sowie der Bypassleitung 47 mit den Ventilen 46 und 48 (z.B. Doppelsitzventil) um die Crossflowpumpe 15 herum wird die Schaltung der kompletten Flussumkehr im Crossflowkreislauf möglich. Dies ermöglicht besonders für den Fall, dass die Konzentratzunahme bis zum letzten Membranmodul der Reihenschaltung besonders groß ist eine gleichmäßige Belastung der Membrane durch die Flussumkehr des gesamten Paketes.

Bei einer Flussumkehr wird im letzten Modul 2₃ (bzw. 2n) der Unfiltratauslauf eines Unfiltratanschlusses 7 zum Unfiltratzulauf. Auch wenn nur in Figur 1b gezeigt, so gilt dies auch für die anderen Figuren. Die Funktionalität ist analog der in Figur 1a beschriebenen.

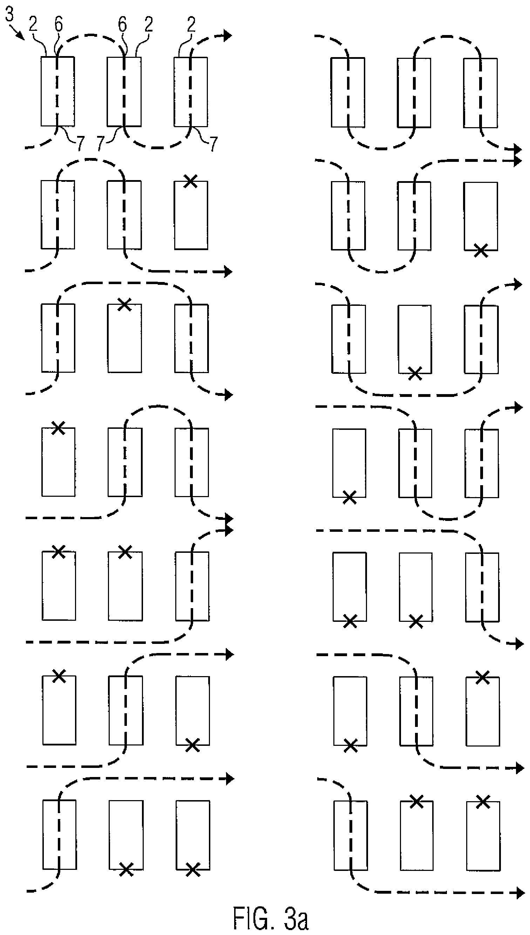

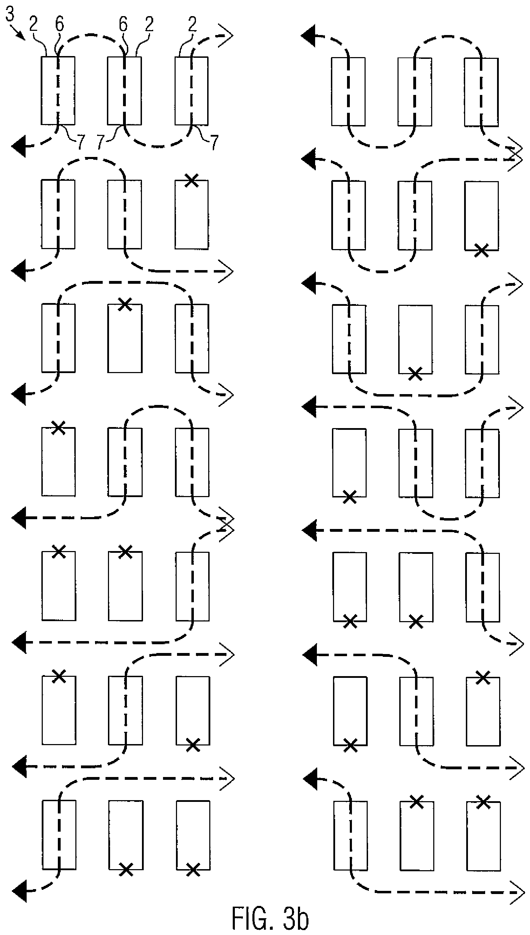

Fig. 3a zeigt die mögliche Verschaltung von beispielsweise einem Modulpaket 3 mit drei Modulen 2, welche erst durch die besonders vorteilhafte Konstruktion mit den jeweiligen zwei Unfiltratzuläufen, zwei Unfiltratausläufen und zwei Filtratausläufen möglich wird. Durch Schalten der Ventile 11 kann beispielsweise, wie aus der ersten Spalte der ersten Zeile der Beispiele hervorgehet, das Unfiltrat durch den zweiten Unfiltratanschluss 7 in das erste Modul eintreten und das Modul am ersten Unfiltratanschluss 6, d. h. hier oben, verlassen. Das zweite Modul wird dann von oben nach unten durchströmt und das dritte wiederum von unten nach oben. Durch Schalten der Ventile 11, wie aus Spalte 2, Zeile 1 hervorgeht, kann der Unfiltratfluss hier auf einfache Art und Weise umgekehrt werden. Die erfindungsgemäße Vorrichtung ermöglicht jedoch nicht nur eine Umkehrung des Strömungsweges wie in Figur 3a gezeigt ist, sondern auch eine Umkehr der Strömungsrichtung, das heißt, dass eine Strömung wie aus Figur 3b hervorgeht, entweder von links nach rechts, das heißt, vom ersten bis in Richtung Endmodul erfolgen kann, jedoch auch in der umkehrten Richtung von rechts nach links, das heißt, vom End- bis zum ersten Modul.

Durch die Umkehr der Flussrichtung in den einzelnen Modulen wird der Druckverlustgradient beim Durchströmen mit Unfiltrat über die Länge des Moduls umgekehrt. Dadurch kehrt sich auch der lokale Transmembrandruck über die Länge der Membran um. Das bewirkt, dass die Membran lokal unterschiedlich stark mit Schmutzfracht belastet wird. Eine große transmembrane Druckdifferenz am Einlauf bewirkt einen starken Flux durch die Membrane, was Schmutz stärker in die Poren der Membran presst, was wiederum das Reinigen der Membran erschwert. Eine kleine transmembrane Druckdifferenz am Auslauf der Membran, insbesondere Membranhohlfaser, bewirkt wiederum einen geringen Antransport von Schmutz an die Membran und eine geringere Verschmutzung. Dies bedeutet jedoch auch, einen geringeren lokalen Fluss durch die Membran.

Wird nun der Fluss beizeiten umgekehrt kann die Beladung der Membran mit Schmutz gleichmäßig erfolgen. Außerdem können die Stellen der Membran, die noch sauber sind, vollständig zur Filtration ausgenutzt werden. Wie beispielsweise aus Spalte 1, Zeile 2 der Figur 3a hervorgeht, ist es auch möglich, durch Schalten der Ventile 11 zumindest eines der Module vom Filtratstrom abzukoppeln, d.h. zum Beispiel einem Bypass zu setzen, bzw. zumindest die Ventile in der Filtratableitung des jeweiligen Moduls zu schließen. Somit wird das entsprechende Modul nicht mehr vom Filtrat durchströmt. Hier wird das letzte Modul vom Filtratstrom abgekoppelt. Ein solches abgekoppeltes Modul kann beispielsweise gezielt einer Rückspülung, unterzogen werden oder die Module können auch getaktet betrieben werden, d. h., dass sie kurzzeitig vom Filtratstrom abgekoppelt werden und dann wie in Spalte 1, Zeile 3 der Figur 3a gezeigt ist, wieder mit Unfiltrat beaufschlagt und durchströmt werden. Die Fig. 3a zeigt die Vielzahl an Möglichkeiten, wie die einzelnen Module miteinander verschaltet werden können.

Gemäß dem erfindungsgemäßen Verfahren bringt das Umschalten der Strömungsrichtung, bzw. Abkoppeln vom Filtratstrom während der Produktion, d. h. während der Filtration, wie zuvor beschrieben den Vorteil mit sich, dass es zu einer gleichmäßigen Beladung der Membranoberfläche mit Schmutz kommt, wobei durch den getaktete Betrieb bzw. die Strömungsumkehr auch ein Reinigungseffekt, d.h. eine Abreinigung der Membran erfolgen kann, was insgesamt zu einer Verlängerung der Standzeit der Filter führt.

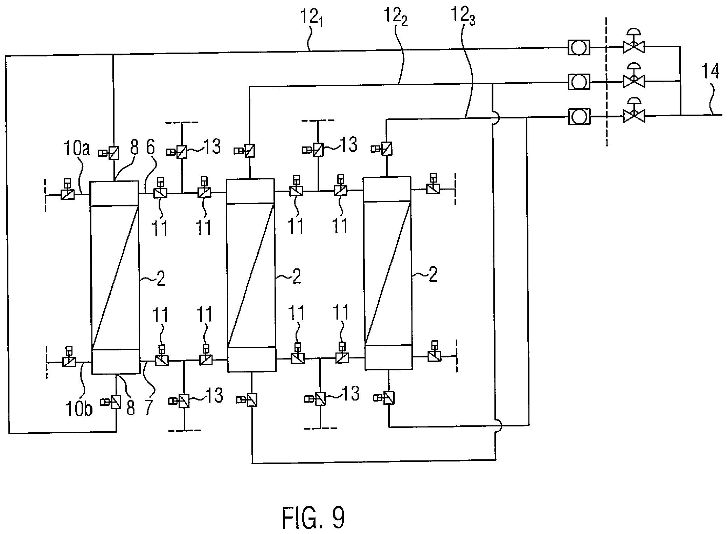

Aber nicht nur für den aktuellen Filtrationsbetrieb ist die erfindungsgemäße Vorrichtung vorteilhaft; auch für die Reinigung und das Rückspülen der Module ist die Ventileinrichtung außerordentlich wichtig. Dazu gibt es grundsätzlich zwei Möglichkeiten und zwar Rückspülen und Reinigen:
Beim Reinigen wird Reinigungsmedium in Filtrationsrichtung der Unfiltratleitung 10 über einen oder mehrere entsprechende Anschlüsse zugeführt und dann auch filtriert. Es ist grundsätzlich auch möglich, dass das Reinigungsmedium über die Anschlüsse 13 am Modul zur CIP-Reinigung zugeführt wird. Mit diesem Verfahren können insbesondere einzelne Module zwischengereinigt werden und dazu abgekoppelt werden, wie aus Fig. 3a hervorgeht. Es ist aber auch möglich, dass über nur einen CIP-Anschluss statt des Unfiltrats Reinigungsmedium durch die in Reihe geschalteten Module 2 geleitet werden kann, wobei auch hier die Richtung veränderbar ist oder einzelne Module getaktet betrieben werden können. Fig. 9 zeigt eine andere Anordnung eines Reinigungsanschlusses hier CIP Anschlusses. Hier ist der CIP-Anschluss jeweils zwischen zwei Ventilen 11 zwischen zwei Modulen 2 jeweils im oberen und unteren Leitungsabschnitt 10a, 10b vorgesehen. Somit kann jeweils ein CIP-Anschluss 13 für das linke und rechte benachbarte Modul 2 verwendet werden. Nach dem Reinigen kann dann das Medium entweder wieder dem Unfiltratkreislauf zugeführt werden, d. h. in eine Unfiltratleitung oder in ein Unfiltratpuffertank geleitet werden, oder aber verworfen werden.

Die Reinigung in Filtrationsrichtung kann mit folgenden Reinigungsmedien (zum Beispiel CIP Medien) erfolgen: Säure (eventuell mit Additiven), Lauge (eventuell mit Additiven), sonstige Zusätze, zum Beispiel Enzyme, Wasser.

Weiter gibt es noch die Reinigung gegen Filtrationsrichtung, wobei Reinigungsmedien rückwärts über die Anschlüsse 8 durch die Membran gefahren werden und über mindestens einen Unfiltratanschluss das Modul 2 verlassen kann. Dazu können die gleichen oben genannten Reinigungsmedien verwendet werden.

Die Reinigung findet nach dem eigentlichen Filtrationsbetrieb statt, das heißt nachdem das letzte Produkt zum Beispiel Bier gefiltert und aus dem Filter ausgeschoben wurde.

Das Rückspülen erfolgt während des eigentlichen Filtrationsbetriebs für einzelne Module bzw. Modulpakete. Das bedingt, dass man sehr sauberes Reinigungsmedium benötigt, da man sonst rückwärtig Verschmutzungen einträgt. Auch beim Rückspülen der einzelnen Module können diese durch die Ventileinrichtungen 11 einzeln und gezielt angesteuert werden.

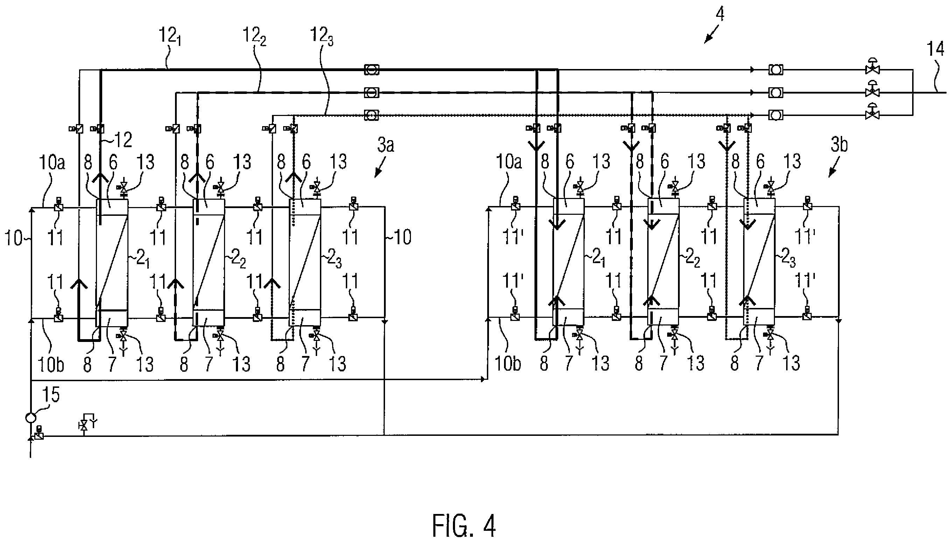

Zum Rückspülen ist ein sehr sauberes Medium notwendig. Das Rückspülen kann mit dem Produkt, hier Bier oder Wasser oder Bier und Wasser erfolgen. Grundsätzlich ist es vorteilhaft, während der Produktion das Produkt, hier das Bier, zum Rückspülen zu verwenden, wobei z. B. vorteilhafterweise das in einem Modul 2 erzeugte Filtrat zum Rückspülen eines anderen Moduls verwendet werden kann, was Zeit spart, (wie beispielsweise in Fig. 4 gezeigt ist). Hier wird beispielsweise Filtrat eines ersten Moduls 2 über die Filtratablaufleitung 12 dem Filtratablauf 8 eines weiteren Moduls 2 zugeleitet. Wenn mehrere n Modulpakete vorgesehen sind, hier Modulpaket 3a und 3b, kann das Unfiltrat beispielsweise des ersten Moduls 2₁ über eine gemeinsame Filtratableitung 12₁ dem Filtratablauf 8 des ersten Moduls 2, des zweiten Modulpakets 3b zum Rückspülen zugeführt werden. Wie aus Fig. 4 hervorgeht, kann das Filtrat des zweiten Moduls des Pakets 3a dem zweiten Modul des Pakets 3b zugeführt werden und das Filtrat des dritten Moduls des Pakets 3a dem dritten Modul des Pakets 3b über die jeweiligen gemeinsamen Filtratleitungen zugeleitet werden. Wie aus Fig. 4 hervorgeht, kann das Rückspülmedium dann über die einzelnen Reinigungsanschlüsse bzw. CIP-Anschlüsse 13 (vorteilhafterweise unterer Anschluss 13 / oberer Anschluss 13 kann zur Entlüftung dienen) abgeführt werden und muss nicht in den Unfiltratkreislauf zurückströmen. Die Ventile 11' , die in der oberen und unteren Unfiltrat Leitung 10a, 10b jeweils vor und hinter dem ersten und letzten Modul angeordnet sind, sollten dann beim Rückspülen geschlossen sein, da das Modulpaket 3b gespült wird und von dem Modulpaket 3a, das produziert abgetrennt werden muss.

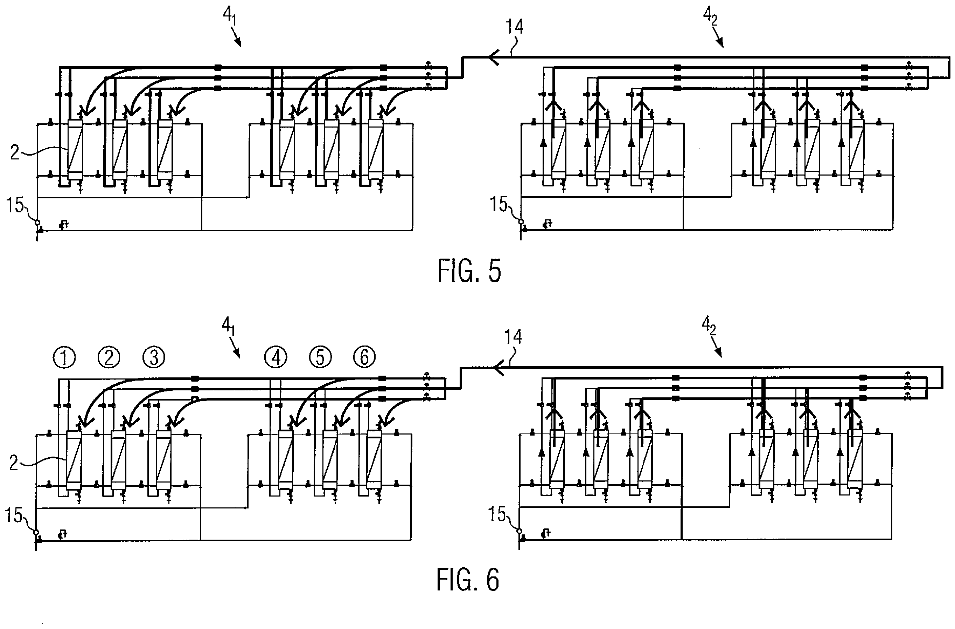

Dies ist nur ein Beispiel für eine mögliche Rückspülart. Wie aus Fig. 5 hervorgeht, ist es auch möglich, wenn es zwei Moduleinheiten mit jeweils mehreren Modulpaketen 3 gibt, dass das Filtrat einer zweiten Moduleinheit 4₂ über eine Sammelfiltratableitung 14 einer ersten Moduleinheit 4₁ zugeführt wird, um die Module rückzuspülen. Das heißt, dass eine Moduleinheit für eine andere das Rückspülmedium produzieren kann und über einen Ventilknoten zuführen kann.

Um die Rückspülmenge zu erhöhen, kann beispielsweise die Anzahl der rückgespülten Module kleiner sein als die Anzahl der Filtrat-produzierenden Module der zweiten Einheit 4₂. Es ist ganz besonders vorteilhaft, wenn die Module einzeln rückgespült werden, z. B. beginnend mit dem Modul 6 in Fig. 6 und dann nacheinander die anderen Module rückgespült werden von Modul 6 bis zu Modul 1.

Gemäß der in Fig. 7 gezeigten Ausführungsform kann es auch vorteilhaft sein, wenn das von den Modulen erzeugte Filtrat in einem Filtratpuffertank 16 gesammelt wird. Dieses Filtrat kann dann zum Rückspülen verwendet werden. Dabei können ein oder mehrere Module bis n Module gleichzeitig rückgespült werden. Vorteilhafterweise kann auch gezielt nur ein Modul rückgespült werden. Dabei befindet sich am Auslauf des Filtratpuffertanks eine Pumpe 17. Die einzelnen Module können dann nacheinander einzeln von unten und/oder von oben gespült werden, damit es keine unsymmetrische Verschmutzung gibt.

Es ist gemäß einem bevorzugten Ausführungsbeispiel der vorliegenden Erfindung für das Rückspülen über den Filtratpuffertank 16, keine zusätzliche Pumpe notwendig. Eine Pumpe, die insbesondere nach dem Filtratpuffertank angeordnet ist kann sowohl als Filtratpumpe als auch als Rückspülpumpe verwendet werden.

Es kann aber auch sein, dass im Hinblick auf eine mögliche Zeitersparnis mehrerer, insbesondere alle Module gleichzeitig rückgespült werden.

Es kann aber auch sein, dass im Hinblick auf unsymmetrischer Verschmutzung verschiedener Module diese unterschiedlich rückgespült werden. Der Verschmutzungsgrad kann zum Beispiel anhand des Transmembrandruckanstieges ermittelt/berechnet werden. Die Rückspülmenge und/oder Rückspülfluss kann dann für die einzelnen Module oder mehrere Module unterschiedlich gewählt werden. Mit unsymmetrischer Verschmutzung bzw. Verschmutzungsgrad kann sowohl die unterschiedliche Verschmutzung einzelner Module und/oder die ungleichmäßige Verschmutzung innerhalbeines Modules verstanden werden.

Grundsätzlich kann bei den vorherigen Ausführungsbeispielen das rückgespülte Medium zum Beispiel über mindestens einen Reinigungsanschluss 13 eines entsprechenden Moduls (vorzugsweise über den unteren Anschluss 13) abgeleitet werden, und muss somit nicht erneut dem Unfiltrat Kreislauf zugeführt werden.

Das bedeutet, dass zur Austragung der Beläge abgespülten Rückstände nicht durch ein nachfolgendes Modul gefahren werden müssen. Da es möglich ist die Module einzelnen zu reinigen oder rückzuspülen kann jedes Modul nach seinem individuellen Bedarf gereinigt werden, das heißt in Abhängigkeit der Länge, Intensität und des Verschmutzungsgrades. Es wäre auch möglich Rückstände im Bypass durch die Kopfräume auszutragen, derart, dass Rückstände nicht durch nachfolgende Module gefahren werden müssen. Dazu können die Module beispielsweise wie in Figur 3a Spalte 1 Zeile 7 gezeigt ist verschaltet werden.

Durch die gezielte Umschaltung der Wege des Unfiltrats durch die Module ist es möglich, die Standzeit der Filtervorrichtung zu optimieren, da die Membran in den Modulen lokal gleichmäßig verschmutzt wird. So erhält sie gezielt einen gleichmäßigen Belag in und außerhalb der Hohlfasermembran. Ein gleichmäßiger Belag ist zudem einfach abzureinigen. Auch bei der Reinigung ist die gezielte Taktung einzelner Module von Vorteil, da so auch die Membran gereinigt wird, die verschmutzt ist, und nicht nur die, die den höchsten Fluss zulässt (welche normalerweise die sauberste ist).

Es ist ganz besonders vorteilhaft, wenn die Vorrichtung Regelventile 40, oder 40' bzw. Durchflussregler, insbesondere in der Filtratableitung aufweist, derart, dass der Durchfluss (Volumen pro Zeit) oder ein dazu proportionaler Wert durch ein Modul einstellbar ist, wobei insbesondere der Durchfluss aller Module in einem Modulpaket auf einen gleichen Wert eingestellt werden kann, was eine gleichmäßige Reinigung oder Rückspülung und somit eine gleichzeitige Rückspülung bzw. Reinigung aller Module eines Modulpakets ermöglicht.

Die Umkehr der Strömungsrichtung oder das Einleiten eines Rückspülvorgangs für ein oder für mehrere Module kann in Abhängigkeit eines Filterparameters erfolgen, der für jedes Modul einzeln gemessen werden kann, beispielsweise der Transmembrandruck und/oder der Filtratfluss pro Zeit pro Modul (das heißt Volumenstrom pro Zeit pro Modul). Es ist auch möglich, eine Strömungsumkehr oder Taktung bzw. Rückspülung einzuleiten, nachdem eine vorbestimmte Zeit abgelaufen ist und/oder eine bestimmte Menge filtriert wurde. Alternativ kann auch die Rückspülung für ein ganzes Modulpaket eingeleitet werden nicht nur für ein einziges Modul.

Wenn von Zulauf eines Modules gesprochen wird, so ist als Synonym gleichwertig auch der Begriff Einlauf eines Modules zu verstehen.

## Patentansprüche

1. Filtervorrichtung (1) mit mindestens einem Modulpaket, das mehrere, insbesondere mindestens drei Module zur Crossflow-Filtration umfasst, die einen ersten Unfiltratanschluss (6) an einem ersten Ende des Moduls (2) aufweisen und einen zweiten Unfiltratanschluss (7) an der gegenüberliegenden Seite des Moduls (2), sowie mindestens einem Filtratablauf (8),
**gekennzeichnet durch**
eine Ventilanordnung, die derart ausgebildet ist, dass die einzelnen Module jeweils wahlweise entweder von dem ersten oder dem zweiten Unfiltratanschluss (6, 7) mit Unfiltrat durchströmbar sind.

2. Filtervorrichtung (1) nach Anspruch 1, **dadurch gekennzeichnet, dass** mehrere Module (2) parallel zueinander angeordnet sind und ihr jeweils erster Unfiltratanschluss (6) mit einem ersten gemeinsamen Leitungsabschnitt (10a) einer Unfiltratleitung (10) in Verbindung steht und ihr jeweils zweiter Unfiltratanschluss (7) mit einem zweiten gemeinsamen Leitungsabschnitt (10b) einer Unfiltratleitung (10) in Verbindung steht, wobei jeweils vor und nach den jeweiligen ersten und zweiten Unfiltratanschlüssen (6, 7) Ventileinrichtungen (11) angeordnet sind, die derart schaltbar sind, dass das jeweilige Modul (2) entweder von dem ersten oder dem zweiten Unfiltratanschluss (6, 7) mit Unfiltrat durchströmbar ist.

3. Filtervorrichtung (1) nach Anspruch 1 oder 2, **dadurch gekennzeichnet, dass** die Ventileinrichtungen (11) der Ventilanordnung derart schaltbar sind, dass die Module (2) in Reihe betrieben werden können und insbesondere die Richtung, in der das Unfiltrat das jeweilige Modul (2) durchströmen kann für jedes Modul (2) einstellbar ist.

4. Filtervorrichtung (1) nach mindestens einem der Ansprüche 1 bis 3, **dadurch gekennzeichnet,** die Ventileinrichtungen (11) derart schaltbar sind, dass ein erstes Modul (2) in einer ersten Richtung durchströmbar ist und ein nachfolgendes Modul (2) in einer zweiten Richtung entgegengesetzt zur ersten Richtung durchströmbar ist und/oder die Ventileinrichtungen (11) derart geschaltet werden können, dass mindestens ein Modul (2) überbrückt wird.

5. Filtervorrichtung (1) nach mindestens einem der Ansprüche 1 bis 4, **dadurch gekennzeichnet, dass** die Filtervorrichtung (1) mehrere Modulpakete (3) umfasst, die eine Moduleinheit (4) bilden und vorzugsweise mehrere Moduleinheiten umfasst.

6. Filtervorrichtung (1) nach mindestens einem der Ansprüche 1 bis 5, **dadurch gekennzeichnet, dass** Modulpakete (3) einer Moduleinheit (4) eine gemeinsame Unfiltratpumpe (15) aufweisen.

7. Filtervorrichtung (1) nach mindestens einem der Ansprüche 1 bis 6, **dadurch gekennzeichnet, dass** Filtrat aus dem mindestens einem Filtratablauf (8) mindestens eines Moduls (2) zum Rückspülen in den mindestens einen Filtratablauf (8) mindestens eines anderen Moduls (2) geleitet werden kann, wobei insbesondere der jeweilige mindestens eine Filtratablauf (8) der jeweiligen Module (2) in eine jeweilige Filtratablaufleitung (12) mündet, wobei, wenn n Module (2) in einem Modulpaket (3) vorgesehen sind, der n-te Filtratablauf (8) eines n-ten Moduls (2) eines ersten Modulpakets (3) und der n-te Filtratablauf (8) eines zweiten Modulpakets (3) in eine gemeinsame n-te Filtratableitung (12) münden.

8. Filtervorrichtung (1) nach mindestens einem der Ansprüche 1 bis 7, **dadurch gekennzeichnet, dass** der erste und zweite Leitungsabschnitt (10a, b) der Unfiltratleitung (10) miteinander verbunden sind und das Unfiltrat durch die Unfiltratleitung (10) und die Module (2) im Kreislauf führbar ist und/oder
die Unfiltratleitung (10) eines ersten Modulpakets (3) mit einer Unfiltratleitung eines zweiten Modulpakets (3) verbunden ist.

9. Filtervorrichtung (1) nach mindestens einem der Ansprüche 1 bis 8, **dadurch gekennzeichnet, dass** in der Filtervorrichtung (1) für n Module (2) mindestens n-1 Reinigungs-Anschlüsse, insbesondere CIP-Anschlüsse (13), insbesondere in dem ersten gemeinsamen Leitungsabschnitt und dem zweiten gemeinsamen Leitungsabschnitt vorgesehen sind oder
jedes Modul (2) zwei eigene Reinigungs-Anschlüsse (13) insbesondere CIP-Anschlüsse aufweist, um Reinigungsmedium, insbesondere CIP-Medium über den ersten oder zweiten Unfiltratanschluss durch das Modul (2) zu leiten oder Unfiltrat oder Reinigungsmedium, das über die Unfiltratleitung (10) dem jeweiligen Modul (2) zugeführt werden kann über den unteren Reinigungsanschluss (13) zu verwerfen, wobei der obere Reinigungsanschluss (13) zum Entlüften dienen kann.

10. Filtrationsverfahren mit einer Filteranordnung nach mindestens einem der Ansprüche 1 bis 9, 19 oder 20, **dadurch gekennzeichnet, dass** die Ventileinrichtungen (11) der Ventilanordnung derart geschaltet werden, dass die einzelnen Module (2) jeweils wahlweise entweder von dem ersten oder zweiten Unfiltratanschluss (6, 7) mit Unfiltrat durchströmt werden können und/oder vom Unfiltratstrom abgekoppelt werden.

11. Verfahren nach Anspruch 10, **dadurch gekennzeichnet, dass** während der Filtration und/oder während der Reinigung der Module (2)
die Ventileinrichtungen (11) so geschaltet werden, dass die Flussrichtung durch mindestens ein Modul (2) eines Modulpakets (3) umgekehrt wird und/oder ein Modul (2) getaktet betrieben wird.

12. Verfahren nach Anspruch 10 oder 11, **dadurch gekennzeichnet, dass** die Ventileinrichtungen (11) derart verschaltet werden, dass Filtrat eines ersten Moduls (2) über die Filtratablaufleitung (12) dem Filtratablauf (8) eines weiteren Moduls (2) zum Rückspülen zugeleitet wird, und insbesondere
wenn mehrere n Modulpakete(3) vorgesehen sind, das Unfiltrat des n-ten Moduls (2) eines ersten Modulpakets (3) über eine gemeinsame Filtratableitung (12) den Filtratablauf (8) des n-ten Moduls (2) eines zweiten Modulpakets (3) zum Rückspülen zugeführt wird.

13. Verfahren nach mindestens einem der vorhergehenden Ansprüche, **dadurch gekennzeichnet, dass** erzeugtes Filtrat einem Filtratpuffertank (16) zugeführt wird und wobei jeweils mindestens eines der Module (2) mit Filtrat aus dem Puffertank (16) rückgespült wird während andere Module (2) Filtrat erzeugen und vorzugsweise
das Filtrat eines Modulpakets (3) oder einer Moduleinheit (4), die mehrere Modulpakete umfasst, dem Filtratpuffertank (16) zugeführt wird und gleichzeitig mindestens ein Modul (2) eines anderen Modulpakets (3) oder einer anderen Moduleinheit (4) mit Filtrat aus dem Puffertank (16) rückgespült wird.

14. Verfahren nach mindestens einem der vorhergehenden Ansprüche , **dadurch gekennzeichnet, dass** mehrere Moduleinheiten (4) vorgesehen sind, die jeweils mehrere Modulpakete (3) umfassen, wobei die erste Moduleinheit (4) eine Sammelfiltratablaufleitung (14) aufweist, über die das Filtrat von mehreren Modulen (2), insbesondere von allen Modulpakten (3) abläuft, wobei vorzugsweise
das Filtrat dieser ersten Moduleinheit (4) über die Sammelfiltratablaufleitung zum Rückspülen von mindestens einem Modul (2) einer zweiten Moduleinheit (4) verwendet wird, wobei insbesondere die Anzahl der rückgespülten Module (2) der zweiten Moduleinheit (4) kleiner ist als die Anzahl der Module (2), die das Filtrat produziert haben.

15. Verfahren nach mindestens einem der Ansprüche 10-14, **dadurch gekennzeichnet, dass** die Module (2) eines Modulpakets (3) vorzugsweise einzeln, nacheinander durch einen oberen und/oder unteren Filtratablauf (8) rückgespült werden.

16. Verfahren nach mindestens einem der Ansprüche 10 bis 15, **dadurch gekennzeichnet, dass** das zum Reinigen verwendete Filtrat entweder Produkt, insbesondere Bier oder aber ein CIP-Medium ist.

17. Verfahren nach Anspruch 14, **dadurch gekennzeichnet, dass**, wenn filtriertes Produkt, insbesondere Bier als Reinigungsmedium zum Rückspülen eines Moduls verwendet wird, nach dem Rückspülen das Produkt wieder der Unfiltratleitung (10) eines Modulpaketes (3), und/oder bis zu einem Puffertank für Unfiltrat oder Konzentrat rückgeführt wird oder wahlweise über einen Reinigungsanschluss (13) verworfen wird.

18. Verfahren nach mindestens einem der Ansprüche 10 bis 17, **dadurch gekennzeichnet, dass** ein Modul (2) aus einem Modulpaket (3) individuell in Abhängigkeit eines Filterparameters durch Rückspülen gereinigt wird und/oder während des Betriebs die Durchflussrichtung des Unfiltrats gewechselt wird oder das Modul abgekoppelt wird.

19. Filtervorrichtung nach mindestens einem der Ansprüche 1-9, **dadurch gekennzeichnet, dass** die Vorrichtung Regelventile (40, 40') bzw. Durchflussregler, insbesondere in der Filtratableitung (12), aufweist, derart, dass der Durchfluss durch ein Modul (2) einstellbar ist, wobei insbesondere der Durchfluss aller Module (2) in einem Modulpaket (3) auf einen gleichen Wert eingestellt werden kann, so dass alle Module eines Modulpakets gleichzeitig gereinigt werden können.

20. Filtervorrichtung nach mindestens einem der Ansprüche 1 - 9 oder 19, **dadurch gekennzeichnet, dass** die Module jeweils mindestens zwei beabstandete Filtratabläufe (8) aufweisen, die insbesondere an gegenüberliegenden Endbereichen eines entsprechenden Moduls (2) angeordnet sind.

21. Filtervorrichtung nach mindestens einem der vorherigen Ansprüchen, **dadurch gekennzeichnet, dass** die mindestens drei Module (3) derart verschaltbar sind, dass sie in Reihe in einer ersten Flussrichtung mit Unfiltrat durchströmbar sind und die Flussrichtung durch eine Umschalteinrichtung (43,44, 46, 48) umgekehrt werden kann, derart, dass die mindestens drei Module in Reihe in einer zweiten zur ersten Flussrichtung entgegengesetzten Flussrichtung durchströmbar sind, wobei insbesondere ein Unfiltratzulauf eines Unfiltratanschlusses (6,7) eines ersten Moduls (2₁) zu einem Unfiltratablauf wird und der Unfiltratablauf eines Unfiltratanschlusses (6,7) eines letzten Moduls (2n) zu einem Unfiltratzulauf wird, wobei die Module (2) vorzugsweise im Kreislauf durchströmbar sind.

## Claims

1. Filter device (1) with at least one module pack that comprises a plurality of modules, in particular three modules, for crossflow filtration, which have a first unfiltered material connection (6) at a first end of the module (2) and a second unfiltered material connection (7) on the opposite side of the module (2), as well as at least one filtrate outlet (8),
**characterised by**
a valve arrangement that is designed such that unfiltered material can optionally flow through the individual modules, either from the first or the second unfiltered material connection (6, 7).

2. Filter device (1) according to claim 1, **characterised in that** a plurality of modules (2) are arranged parallel to one another and their respective first unfiltered material connection (6) is connected to a first common conduit section (10a) of an unfiltered material conduit (10) and their respective second unfiltered material connection (7) is connected to a second common conduit section (10b) of an unfiltered material conduit (10), wherein arranged respectively before and after the respective first and second unfiltered material connections (6, 7) are valve devices (11) which can be switched such that unfiltered material can flow through the respective module (2) either from the first or the second unfiltered material connection (6, 7).

3. Filter device (1) according to claim 1 or 2, **characterised in that** the valve devices (11) of the valve arrangement can be switched such that the modules (2) can be operated in series, and in particular for each module (2) it is possible to set the direction in which the unfiltered material can flow through the respective module (2).

4. Filter device (1) according to at least one of the claims 1 to 3, **characterised in that** the valve devices (11) can be switched such that there can be a flow through a first module (2) in a first direction and there can be a flow through a subsequent module (2) in a second direction opposed to the first direction, and/or the valve devices (11) can be switched such that at least one module (2) is bypassed.

5. Filter device (1) according to at least one of the claims 1 to 4, **characterised in that** the filter device (1) comprises a plurality of module packs (3) which form a modular unit (4) and preferably comprises a plurality of modular units.

6. Filter device (1) according to at least one of the claims 1 to 5, **characterised in that** module packs (3) of a modular unit (4) have a common unfiltered material pump (15).

7. Filter device (1) according to at least one of the claims 1 to 6, **characterised in that** filtrate from the at least one filtrate outlet (8) of at least one module (2) can be conducted into the at least one filtrate outlet (8) of at least one other module (2) for backflushing, wherein in particular the respective at least one filtrate outlet (8) of the respective modules (2) opens into a respective filtrate outlet conduit (12), wherein if n modules (2) are provided in a module pack (3), the n^{th} filtrate outlet (8) of an n^{th} module (2) of a first module pack (3) and the n^{th} filtrate outlet (8) of a second module pack (3) open into a common n^{th} filtrate outlet (12).

8. Filter device (1) according to at least one of the claims 1 to 7, **characterised in that** the first and second conduit sections (10a, b) of the unfiltered material conduit (10) are connected to one another and the unfiltered material can be circulated through the unfiltered material conduit (10) and the modules (2), and/or
the unfiltered material conduit (10) of a first module pack (3) is connected to an unfiltered material conduit of a second module pack (3).

9. Filter device (1) according to at least one of the claims 1 to 8, **characterised in that** in the filter device (1) for n modules (2) at least n-1 cleaning connections, in particular CIP [cleaning in place] connections (13), are provided, in particular in the first common conduit section and the second common conduit section, or
each module (2) has two cleaning connections (13) of its own, in particular CIP connections, in order to conduct a cleaning agent, in particular a CIP medium, through the module (2) via the first or second unfiltered material connection, or for the unfiltered material or cleaning agent that can be supplied via the unfiltered material conduit (10) to the respective module (2) to be discarded via the lower cleaning connection (13), wherein the upper cleaning connection (13) can serve for venting.

10. Filtration method with a filter arrangement according to at least one of the claims 1 to 9, 19 or 20, **characterised in that** the valve devices (11) of the valve arrangement can be switched such that the individual modules (2) can optionally have unfiltered material flow through them respectively either from the first or the second unfiltered material connection (6, 7) and/or are disconnected from the unfiltered material flow.

11. Method according to claim 10, **characterised in that** during filtration and/or during cleaning of the modules (2), the valve devices (11) are switched such that the direction of flow through at least one module (2) of a module pack (3) is reversed and/or a module (2) is operated in a clocked manner.

12. Method according to claim 10 or 11, **characterised in that** the valve devices (11) are interconnected such that filtrate from a first module (2) is supplied via the filtrate outlet conduit (12) to the filtrate outlet (8) of a further module (2) for backflushing, and in particular
if several module packs (3) are provided, the unfiltered material of the n^{th} module (2) of a first module pack (3) is supplied via a common filtrate discharge conduit (12) to the filtrate discharge outlet (8) of the n^{th} module (2) of a second module pack (3) for backflushing.

13. Method according to at least one of the preceding claims, **characterised in that** any filtrate that is produced is supplied to a filtrate buffer tank (16), and wherein respectively at least one of the modules (2) is backflushed with filtrate from the buffer tank (16) whilst other modules (2) produce filtrate and preferably the filtrate of a module pack (3) or a modular unit (4) that comprises several module packs is supplied to the filtrate buffer tank (16) and simultaneously at least one module (2) of another module pack (3) or another modular unit (4) is backflushed with filtrate from the buffer tank (16).

14. Method according to at least one of the preceding claims, **characterised in that** a plurality of modular units (4) is envisaged, which respectively comprise a plurality of module packs (3), wherein the first modular unit (4) has a collective filtrate discharge conduit (14), via which the filtrate from a plurality of modules (2) is discharged, in particular from all the module packs (3), wherein preferably
the filtrate of this first modular unit (4) is used, via the collective filtrate discharge conduit, for backflushing at least one module (2) of a second modular unit (4), wherein in particular the number of backflushed modules (2) of the second modular unit (4) is smaller than the number of modules (2) that have produced the filtrate.

15. Method according to at least one of the claims 10-14, **characterised in that** the modules (2) of a module pack (3) are preferably backflushed individually, one after another, through an upper and/or lower filtrate outlet (8).

16. Method according to at least one of the claims 10 to 15, **characterised in that** the filtrate used for cleaning is either a product, in particular beer, or else a CIP medium.

17. Method according to claim 14, **characterised in that** when a filtered product, in particular beer, is used as a cleaning agent for backflushing a module, after the backflushing the product is returned to the unfiltered material conduit (10) of a module pack (3), and/or to a buffer tank for unfiltered material or concentrate, or optionally is discarded via a cleaning connection (13).

18. Method according to at least one of the claims 10 to 17, **characterised in that** a module (2) of a module pack (3) is cleaned individually, depending on a filter parameter, by backflushing, and/or during operation the direction of flow of the unfiltered material is changed, or the module is disconnected.

19. Filter device according to at least one of the claims 1-9, **characterised in that** the device has control valves (40, 40') or flow regulators, in particular in the filtrate discharge conduit (12), such that the flow through a module (2) can be adjusted, wherein in particular the flow through all modules (2) in a module pack (3) can be set to the same value, so that all modules of a module pack can be cleaned simultaneously.

20. Filter device according to at least one of the claims 1- 9 or 19, **characterised in that** the modules respectively have at least two filtrate outlets (8) spaced apart from one another, which in particular are arranged at opposite end areas of a corresponding module (2).

21. Filter device according to at least one of the preceding claims, **characterised in that** the at least three modules (3) can be interconnected such that unfiltered material can flow through them in series in a first direction of flow, and the direction of flow can be reversed by a switching device (43, 44, 46, 48) such that the at least three modules can have a flow through them in series in a second direction of flow that is opposed to the first direction of flow, wherein in particular an unfiltered material inlet of an unfiltered material connection (6,7) of a first module (2₁) becomes an unfiltered material outlet and the unfiltered material outlet of an unfiltered material connection (6,7) of a last module (2n) becomes an unfiltered material inlet, wherein the modules (2) can be flowed through preferably in circulation.

## Revendications

1. Dispositif de filtration (1) muni d'au moins un ensemble de modules comprenant plusieurs, en particulier au moins trois modules de filtration par écoulement transversal présentant un premier raccordement pour non-filtrat (6) à une première extrémité du module (2) et un second raccordement pour non-filtrat (7) au niveau du côté opposé du module (2), ainsi qu'au moins une évacuation pour filtrat (8),
**caractérisé par**
un agencement de vannes conçu de telle manière que les modules individuels peuvent être traversés par du non-filtrat respectivement au choix à partir du premier ou du second raccordement pour non-filtrat (6, 7).

2. Dispositif de filtration (1) selon la revendication 1, **caractérisé en ce que** plusieurs modules (2) sont agencés parallèlement les uns aux autres et leur premier raccordement pour non-filtrat (6) respectif est en liaison avec une première section de conduite (10a) commune d'une conduite pour non-filtrat (10) et leur second raccordement pour non-filtrat (7) respectif est en liaison avec une seconde section de conduite (10b) commune d'une conduite pour non-filtrat (10), dans lequel des dispositifs formant vanne (11) sont agencés respectivement avant et après les premier et second raccordements pour non-filtrat (6, 7) respectifs qui peuvent être commutés de telle manière que le module (2) respectif peut être traversé par du non-filtrat depuis le premier ou le second raccordement pour non-filtrat (6, 7).

3. Dispositif de filtration (1) selon la revendication 1 ou 2, **caractérisé en ce que** les dispositifs formant vanne (11) de l'agencement de vannes peuvent être commutés de telle manière que les modules (2) peuvent être actionnés en série et en particulier de telle manière que la direction dans laquelle le non-filtrat peut traverser le module (2) respectif peut être ajustée pour chaque module (2).

4. Dispositif de filtration (1) selon au moins l'une quelconque des revendications 1 à 3, **caractérisé en ce que** les dispositifs formant vanne (11) peuvent être commutés de telle manière qu'un premier module (2) peut être traversé dans une première direction et un module (2) ultérieur peut être traversé dans une seconde direction opposée à la première direction et/ou les dispositifs formant vanne (11) peuvent être commutés de telle manière qu'au moins un module (2) est dérivé.

5. Dispositif de filtration (1) selon au moins l'une quelconque des revendications 1 à 4, **caractérisé en ce que** le dispositif de filtration (1) comprend plusieurs ensembles de modules (3) formant une unité de module (4) et comprend de manière préférée plusieurs unités de module.

6. Dispositif de filtration (1) selon au moins l'une quelconque des revendications 1 à 5, **caractérisé en ce que** des ensembles de modules (3) d'une unité de module (4) présentent une pompe à non-filtrat (15) commune.

7. Dispositif de filtration (1) selon au moins l'une quelconque des revendications 1 à 6, **caractérisé en ce que** du filtrat provenant de la au moins une évacuation pour filtrat (8) d'au moins un module (2) peut être dirigé vers la au moins une évacuation pour filtrat (8) d'au moins un autre module (2) en vue d'un rinçage à contre-courant, dans lequel en particulier la au moins une évacuation pour filtrat (8) respective des modules (2) respectifs débouche dans une dérivation de filtrat (12) respective, dans lequel, lorsque n modules (2) sont prévus dans un ensemble de modules (3), la n-ième évacuation pour filtrat (8) d'un n-ième module (2) d'un premier ensemble de modules (3) et la n-ième évacuation pour filtrat (8) d'un second ensemble de modules (3) débouchent dans une n-ième dérivation de filtrat (12) commune.

8. Dispositif de filtration (1) selon au moins l'une quelconque des revendications 1 à 7, **caractérisé en ce que** les première et seconde sections de conduite (10a, b) de la conduite pour non-filtrat (10) sont reliées l'une à l'autre et le non-filtrat peut être guidé de manière à suivre un circuit à travers la conduite pour non-filtrat (10) et les modules (2) et/ou
la conduite pour non-filtrat (10) d'un premier ensemble de modules (3) est reliée à une conduite pour non-filtrat d'un second ensemble de modules (3).

9. Dispositif de filtration (1) selon au moins l'une quelconque des revendications 1 à 8, **caractérisé en ce qu'**au moins n-1 raccordements de nettoyage, en particulier des raccordements de nettoyage en place NEP (13), sont prévus dans le dispositif de filtration (1) pour n modules (2), en particulier dans la première section de conduite commune et la seconde section de conduite commune, ou
chaque module (2) présente deux raccordements de nettoyage (13) distincts, en particulier des raccordements de nettoyage en place NEP, afin de faire circuler du fluide de nettoyage, en particulier du fluide NEP, à travers le module (2) en passant par le premier ou second raccordement pour non-filtrat ou afin de rejeter, par le raccordement de nettoyage inférieur (13), du non-filtrat ou du fluide de nettoyage qui peut être amené au module (2) respectif par la conduite pour non-filtrat (10), dans lequel le raccordement de nettoyage supérieur (13) peut servir à la purge d'air.

10. Procédé de filtration comprenant un agencement de filtration selon au moins l'une quelconque des revendications 1 à 9, 19 ou 20, **caractérisé en ce que** les dispositifs formant vanne (11) de l'agencement de vannes sont commutés de telle manière que les modules (2) individuels peuvent être respectivement traversés de manière sélective par du non-filtrat depuis le premier ou le second raccordement pour non-filtrat (6, 7) et/ou être découplés du flux de non-filtrat.

11. Procédé selon la revendication 10, **caractérisé en ce que,** pendant la filtration et/ou pendant le nettoyage des modules (2),
les dispositifs formant vanne (11) sont commutés de sorte que la direction d'écoulement à travers au moins un module (2) d'un ensemble de modules (3) est inversée et/ou de sorte qu'un module (2) est exploité de manière cadencée.

12. Procédé selon la revendication 10 ou 11, **caractérisé en ce que** les dispositifs formant vanne (11) sont commutés de telle manière que le filtrat d'un premier module (2) est dirigé vers l'évacuation de filtrat (8) d'un autre module (2) en passant par la dérivation de filtrat (12) en vue d'un rinçage à contre-courant, et en particulier lorsque plusieurs n ensembles de modules (3) sont prévus, le non-filtrat du n-ième module (2) d'un premier ensemble de modules (3) est amené à l'évacuation pour filtrat (8) du n-ième module (2) d'un second ensemble de modules (3) en passant par une dérivation de filtrat (12) commune en vue d'un rinçage à contre-courant.

13. Procédé selon au moins l'une quelconque des revendications précédentes, **caractérisé en ce que** le filtrat produit est acheminé vers un réservoir tampon de filtrat (16) et dans lequel respectivement au moins un des modules (2) est rincé à contre-courant avec du filtrat provenant du réservoir tampon (16) tandis que d'autres modules (2) produisent du filtrat, et de manière préférée
le filtrat d'un ensemble de modules (3) ou d'une unité de modules (4) comprenant plusieurs ensembles de modules est acheminé vers le réservoir tampon de filtrat (16) et simultanément au moins un module (2) d'un autre ensemble de modules (3) ou d'une autre unité de modules (4) est rincé à contre-courant avec du filtrat provenant du réservoir tampon (16).

14. Procédé selon au moins l'une quelconque des revendications précédentes, **caractérisé en ce que** plusieurs unités de modules (4) comprenant respectivement plusieurs ensembles de modules (3) sont prévues, dans lequel la première unité de module (4) présente une conduite d'évacuation de filtrat de collecte (14) par laquelle circule le filtrat de plusieurs modules (2), en particulier de tous les ensembles de modules (3), dans lequel de manière préférée
le filtrat de ladite première unité de module (4) est utilisé, en passant par la conduite d'évacuation de filtrat de collecte, pour le rinçage à contre-courant d'au moins un module (2) d'une deuxième unité de module (4), dans lequel en particulier le nombre de modules (2) rincés à contre-courant de la deuxième unité de module (4) est inférieur au nombre de modules (2) qui ont produit le filtrat.

15. Procédé selon au moins l'une quelconque des revendications 10 à 14, **caractérisé en ce que** les modules (2) d'un ensemble de modules (3) sont rincés de manière préférée individuellement, l'un après l'autre, grâce à une évacuation pour filtrat (8) supérieure et/ou inférieure.

16. Procédé selon au moins l'une quelconque des revendications 10 à 15, **caractérisé en ce que** le filtrat utilisé pour le nettoyage est un produit, en particulier de la bière, ou bien un agent NEP.

17. Procédé selon la revendication 14, **caractérisé en ce que**, lorsque du produit filtré, en particulier de la bière, est utilisé comme agent de nettoyage pour le rinçage à contre-courant d'un module, le produit est, après le rinçage à contre-courant, à nouveau renvoyé vers la conduite pour non-filtrat (10) d'un ensemble de modules (3) et/ou jusqu'à un réservoir tampon pour non-filtrat ou pour concentré, ou est rejeté de manière sélective en passant par un raccordement de nettoyage (13).

18. Procédé selon au moins l'une quelconque des revendications 10 à 17, **caractérisé en ce qu'**un module (2) issu d'un ensemble de modules (3) est nettoyé individuellement par lavage à contre-courant en fonction d'un paramètre de filtration et/ou **en ce que**, en cours de fonctionnement, la direction d'écoulement du non-filtrat est permutée ou le module est découplé.

19. Dispositif de filtration selon au moins l'une quelconque des revendications 1 à 9, **caractérisé en ce que** le dispositif présente des vannes de régulation (40, 40') ou des régulateurs de débit, en particulier au sein de la dérivation de filtrat (12), de telle manière que le débit au travers d'un module (2) peut être ajusté, dans lequel en particulier le débit de tous les modules (2) peut être ajusté à une même valeur au sein d'un ensemble de modules (3), de sorte que tous les modules d'un ensemble de modules peuvent être nettoyés simultanément.

20. Dispositif de filtration selon au moins l'une quelconque des revendications 1 à 9 ou 19, **caractérisé en ce que** les modules présentent respectivement au moins deux évacuations pour filtrat (8) espacées agencées en particulier au niveau de régions d'extrémité opposées d'un module (2) correspondant.

21. Dispositif de filtration selon au moins l'une quelconque des revendications précédentes, **caractérisé en ce que** les au moins trois modules (3) peuvent être commutés de telle manière qu'ils peuvent être traversés en série par du non-filtrat dans une première direction d'écoulement et la direction d'écoulement peut être inversée grâce à un dispositif de commutation (43, 44, 46, 48) de telle manière que les au moins trois modules peuvent être traversés en série dans une seconde direction d'écoulement opposée à la première direction d'écoulement, dans lequel en particulier une alimentation en non-filtrat d'un raccordement pour non-filtrat (6, 7) d'un premier module (21) devient une évacuation pour non-filtrat et l'évacuation pour non-filtrat d'un raccordement pour non-filtrat (6, 7) d'un dernier module (2n) devient une alimentation en non-filtrat, dans lequel les modules (2) peuvent être traversés de manière préférée de manière à suivre un circuit.
